# EUROPEAN PATENT SPECIFICATION

(11) **EP 0 611 510 B1**
(45) Date of publication and mention of the grant of the patent: **16.09.1998**
(21) Application number: 92923548.9
(22) Date of filing: 06.11.1992
(51) Int. Cl.: H04N 5/63, H02H 3/12

(54) **DEVICE FOR CONNECTION AND DISCONNECTION OF AN APPARATUS TO A CURRENT SOURCE**
VORRICHTUNG ZUR VERBINDUNG UND ABTRENNUNG EINES GERÄTES VON EINER STROMQUELLE
DISPOSITIF POUR CONNECTER ET DECONNECTER UN APPAREIL ET UNE SOURCE DE COURANT

(30) Priority: 08.11.1991 SE 9103304
(43) Date of publication of application: 24.08.1994
(73) Proprietor: EM EVOLUTION AB, 271 93 Ystad (SE)
(72) Inventor: HOLMQUIST, Erland, S-183 47 Taby (SE)
(86) International application number: SE9200768
(87) International publication number: WO9309634

(56) References cited:
- CH-A- 609 500
- US-A- 3 088 009
- US-A- 4 600 948

## Description

### BACKGROUND OF THE INVENTION

The invention relates to a device to connect and disconnect a voltage source to an electric apparatus, such as a television set or a similar apparatus, which takes on a stand-by state or a similar operating condition.

Modern television sets are mostly equipped with a remote control device and can be set into the three different operating states "off', "stand-by" and "on". Picture and sound are presented in the "on" state.

Television sets of this type are often left in the stand-by state during the whole day, and the stand-by state is indicated by a lit red light emitting diode (LED). The LED light is intended to remind the user to turn off the television set at night, hereby from a safety point of view, to separate the television set from the mains supply.

The primary intention with the stand-by state is to preheat the glow wire of the picture tube so that the picture appears rapidly after the television set has been turned on. Secondly, the remote control function gets its power supplied. However, the power consumption of the stand-by state is 10 - 20 W and there is a statistically significant risk of the television set catching fire. Hence, users are recommended to turn the television set off completely during the night and when they are not at home for a long time, e.g. during vacations.

Further, a reflection of light could be misinterpreted as a remote control command and could bring the television set into the "on" state unintentionally. Strangers could turn on the television set too, through a window with any type of general remote control device.

Many users leave the television set in the stand-by state and never turn it fully off. Suppose that the television set is in the stand-by state during 20 hours every day and that the power consumption is 10 W, then the television set wastes 75 kWh per year. The total wasted power consumption in one million television sets will be 10 MW and with an unfortunate pulsed current wave form from the power utility point of view. Hence, several power plants in every country are fully occupied just supplying unused television sets with power. The wasted production value to keep television sets in a stand-by state may be as large as 20 million US dollars a year in Sweden alone.

It is important to eliminate the stand-by state as an increasing number of television sets with remote control and stand-by state function grow older. These sets face an increasing risk of catching fire.

### THE STATE OF THE ART

In CH-A-609 500 is presented an apparatus for disconnecting a load from a power supply when the load current drops below a predetermined level. The apparatus comprises means for determining the load current, first switch means for interrupting the power supply to the load and to the means for determining, sensor means for sensing the load resistance when the supply of power is interrupted, means for reconnecting the load to the power supply when the sensed load resistance drops below a predetermined level, and second switch means for establishing a second path of power supply to the load. US-A-4 600 948 (=EP-B-0 075 214) discloses an apparatus for switching off the standby operation of a television receiver on the basis of a time from the beginning of the stand-by condition, by means of a microprocessor acting as a timer, which operates on an activation winding of the mains switch after a pre-defined time and causes the mains switch to go to the off state, thereby turning the television set off. EP-A-0354523 and DE-C-3417049 present stand-by circuitry with reduced power consumption.

The use of a timer to turn off the television set has the disadvantage that the turn off action either occurs while the television set is still in use or, a long time after it has been turned to the stand-by state. Having faced a number of too early turn off activities the user is tempted to set the timer to a too long interval. However, if the television set is turned off long after it is used, all the disadvantages in a television set without a timer remain unaffected, i.e. waste of energy, risk of catching fire and risk for unwanted turn on.

DE-A-3445078 presents a switching device arranged on the mains cable ofthe television set. The said device uses a separately mounted photo resistor with its own supply through a mains related wire where the said photo resistor is supposed to detect an alternating voltage generated by the picture tube. The voltage is rectified and its level sensed. Obviously, the line scan frequency is sensed and when the television broadcast finishes the voltage sensed by the photo resistor decays and the said device switches the television set off. As mentioned, the photo resistor requires a mains related supply. The said device only senses whether the television broadcast is on or off and turns off the television set when there is no broadcast.

Most modern television sets have a built in function to detect absence of carrier wave at the end of the broadcast and automatically set themselves into the stand-by state, which we want to eliminate with the method according to the invention.

Hence, the presented device, which is connected on the mains cable, does not solve the problem set out to solve with an automatic turn off directly at, or if it is desirable, after a certain time interval following the entry into the stand-by state, when the television set has been turned off with the remote control unit. However, the method presented in this invention must have a suitable option for this purpose added to it, which is not difficult to arrange.

However, none of these prior art solutions reaches the goal set by the device of the present invention : To disconnect the television set completely from the mains supply and to re-establish power supply in a practical way.

### SUMMARY OF THE INVENTON

This problem is solved by means of a device which presents the features enumerated in claim 1. In particular, the invention solves the problem of re-establishing the power to a TV set.

The presented invention and the implementation of the invention also have the advantage that they can be connected by any user to any type and model of television set that is powered through a mains cable and has a stand-by state.

The function of the invention presented in this application is to eliminate the stand-by state whether it is reached by means of a remote control device or any other method. The stand-by state is either left at once, i.e. within less than a few seconds or after some other settable delay time, e.g. 30 minutes. The device presented in this application can be used together with any television set, as said device does not have to be mounted inside the television set.

The device presented in this application can certainly be mounted and used inside any television set too in order to apply the presented method.

The objects are met with a device having a switching device arranged in the mains supply path to the protected object, in such a way that the mains voltage source is disconnected by a relay device if the supplied current or the thereby caused power consumption falls below a certain level, and that the mains voltage source is connected again through the relay device by mechanical control of the relay device or through the closure of a switch in parallel with the relay device, causing said current to flow through the relay device and to maintain the connection if said current or power consumption exceeds still another level.

The purpose of the invention is met with the invented device, which implements the method by a device arranged on the mains connection of the protected object and that said device contains a relay device or a thermostat arranged in such a way that the level of the current supplied to the protected object is sensed or the level of the power loss, which cause the relay device or the thermostat to disconnect the mains voltage source if the current level or its related power level fall below a preset level and with said relay device or thermostat arranged to connect the mains voltage if said current level or power level exceeds still another level.

Preferable implementations of the invention are stated through the features defined in the sub-claims.

Hence, the presented device mainly refers to a device separated from the television set which is connected between the mains power outlet and the input transformer of the television set according to: 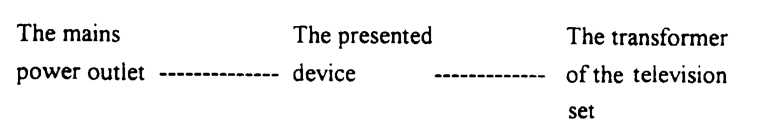 The presented device may contain the following sub-functions:
- Measurement of the current or energy consumption of the television set
- Turning off the power supplied to the television set if the consumption is too low
- Turning on the current supply of the television set through a push button or through a remote control signal.

An important design requirement on the device, according to the invention, is that it must present such an implementation that the risk of catching fire is much smaller for the invented device than the normal television set. Hence, it has to be designed in such a way that it is completely turned off when the television set is turned off, or in such a way that it is supplied from a battery or an accumulator which holds such a small amount of energy that it can not cause a fire or destroy the device.

### DESCRIPTION OF THE PREFERRED EMBODIMENTS

The invention is described below in detail together with four possible realizations of the invention, which are presented schematically in the accompanying drawings where:
- Fig 1.: presents a realization with electronic relay function
- Fig 2.: presents a realization with magnetic relay
- Fig 3: presents a realization with thermal relay
- Fig 4.: presents a realization with electronic relay and with remote start function.

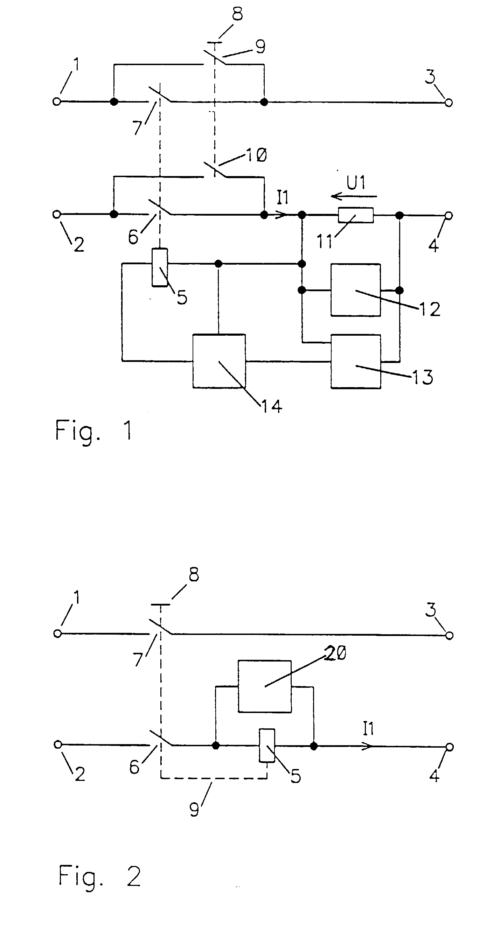

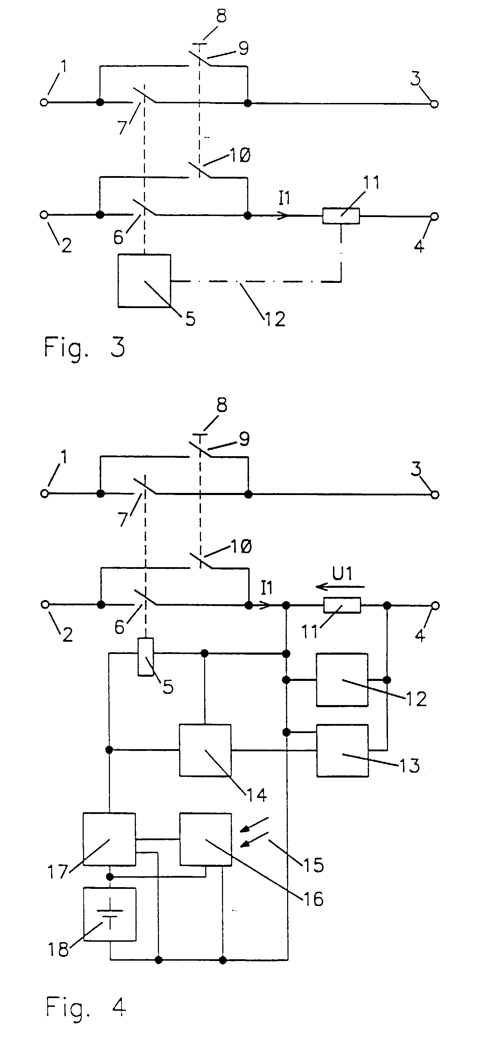

Howeve, these realizations should not be considered to be limiting but to serve as illustrated examples on different possible types of realizations. For instance, the remote start function described below in fig 4. can be combined with the realizations presented in fig 1 - 3.

### REALIZATION WITH ELECTRONIC RELAY FUNCTION

The design of a device according to the invention is shown in fig 1. In the figure the reference numbers 1 and 2 refer to a mains supply connection and 3 and 4 a connection to an apparatus with a stand-by state function. The device includes a current reconnection function, which in itself contains a manually operated current switch 8 with contacts 9 and 10 and a relay 5 in parallel to it. This relay has a relay coil which affects the contacts 6 and 7. In series with the current reconnection function there is a resistor 11. Across this resistor 11 a voltage limiter 12 is arranged, one output of which is connected to the coil of the relay 5. The device also contains an AC/DC-converter 13 and a level comparator 14.

The device is intended to operate in the following way. The current level in the mains supply cable to the television set , i.e. the current I1 through the device, decides if the television set should remain connected or not by the relay 5.

The current I1 is measured with the resistor 11. Across 11 a voltage U1 is created by I1. The voltage limiter 12 limits the voltage to a level which the rest of the device can withstand and which is so low that the function of the television set is not affected. The resistor 11. is sized in such a way that a certain lowest current level can activate the relay. The voltage U1 is rectified and smoothed in the AC/DC-converter 13. The hereby created DC voltage is compared to a reference level in the level comparator 14. If the incoming voltage level to the level comparator 14 is high enough, then the relay coil in relay 5 is activated and its contacts, schematically given as 6 and 7, connect the television set to the mains supply, and a self holding state is achieved by the device.

In order to initiate the self holding function, the current I1 first has to be carried through the switch contacts 9 and 10, which are closed by the push button 8. When the current level of I1 has become so large that the relay 5 is activated, button 8 may be released.

The level comparator 14 can be left out as a separate component, if the level comparison offered by the relay 5 can be utilized. In such a case the relay has to present a turn on and a turn off level.

The voltage limiter 12 is of a special importance, as the current I1 normally not at all has a sinusoid shape but a pulse shape. The peak value of the pulses may be considerably (approx. 5 times) larger than the actual root-mean-squared value of the current. For instance, the current pulses are created during the charging of capacitors in the power supply section of the television set. The pulsed current shape is at hand during normal operation as well as stand-by. When the current falls below a preset level the relay 5 is deactivated and the mains connection to the television set is broken.

### REALIZATION WITH MAGNETIC RELAY FUNCTION

The design of the device is shown in fig 2. It includes a magnetic relay 5 with contacts 6 and 7 in the relay and it is preferably fitted with an interference suppressor 10. In the figure the reference numbers 1 and 2 refer to a mains supply connection and 3 and 4 a connection to an apparatus with a stand-by state function.

The push button 8 forces the contacts of relay 5 to close. If the current level of I1 is high enough then the contacts of the relay remain closed through the relay 5. The force acting on the contacts is denoted by the reference number 9.

The interference suppressor 20 eliminates interference generated by the relay 5.

The relay 5 should have a "slow action" such that it can create a stable mean value of the definitely pulse shaped current I1 to the television set. The interference suppressor is designed to add to the slow action by an addition of a turn on delay time.

The relay is also designed to breake distinctly if the breaking process has started. This is achieved with a change of the magnetic circuit during the breaking motion.

This realization is somewhat simpler that the one described in the previous section, but the relay 5 must be of a special design for this device.

### REALIZATION WITH THERMAL RELAY FUNCTION

The design of the device is shown in fig 3. In the figure the reference numbers 1 and 2 refer to a mains supply connection and 3 and 4 a connection to an apparatus with a stand-by state function. Further, the design includes a thermal relay with thermostat 5 and a resistor 11, between which a thermal connection is symbolized with the reference number 12. A current switch 8 with contacts 9 and 10 is arranged across the relay. The basic idea is as before that the level of the supply current I1 to the television set decides if the the television set should remain connected or not by the thermostat 5.

The push button 8 acts to connect the current during a turn on. If the current level of I1 is high enough the contacts remain closed by the action of the thermostat 5 on the contacts 6 and 7 in the relay.

The current I1 heats the resistor 11, which is arranged in such a way that its dissipated heat affects the thermostat 5. At a sufficiently high current level the resistor will be so hot that the thermostat turns on.

In order to achieve a fast turn on action the resistor should be a non linear element, e.g. of the NTC type, which stands for "Negative Temperature Coefficient".

In order to achieve a rapid turn off action (< 5 min) the resistor 11 and the thermostat 5 have to be designed with a thermal mass as small as possible.

This design has cost advantages in relation to the design with an electronic relay function and it can be reached with the use of standard components in small production series. However, the design has some disadvantages:
- the turn off process is slow, as the resistor and the thermostat have to cool off
- the device will be hot as the thermostat has to be heated and as a good cooling path must be available so that the thermostat can cool off
- the turn off delay increases with increasing surrounding temperature.

### REALIZATION WITH ELECTRONIC RELAY FUNCTION AND REMOTE START

The electronic relay function described above could be supplemented with a sensing of the general level of the type of pulsed IR radiation which a remote control unit of a television set generates. Now the device will have a remote turn on action. The user does not have to push button 8, which affects the contacts 9 and 10.

The device includes an IR sensor of a conventional type, an IR/DC converter 16 connected to the relay driver function 17 and power supply unit for these, e.g. a battery 18. The remainder of the device is realized as in fig 1. Now the self holding action of the device can either be started with IR radiation, denoted by 15 in the figure, or by action on the button 8.

If the IR sensing opening of the device is placed in the vicinity of the IR sensor of the television set, then the device will connect the television set at first and then start the set on the selected channel. Now the television set consumes a large amount of current and the relay 5 remains activated.

The IR/DC converter 16 is designed in such a way that it is only affected by pulsed IR radiation with the frequency, pulse-pause relation and in the optical wavelength interval which is found with the remote control unit of television sets. Hereby the risk of an unintentional start is reduced. The voltage from the IR/DC converter 16 is amplified by the relay driver 17, which activates the relay if a sufficiently high level of IR radiation of the right type is detected.

The IR/DC converter 16 and the relay driver 17 are supplied from the battery 18. Hereby it is certified that the disconnecting device not by itself contains an amount of energy large enough to put it on fire or cause a fire which it was put in place to prevent.

Hence, the advantage with the IR option is that the behaviour of the user does not have to change compared to the one prevailing today. The following disadvantages can be found with this realization:
- unauthorized turn on of the television set from an intruding remote control unit is possible
- the television set is turned on for a short while if the remote control unit of another set is activated nearby. The device will turn off after a few seconds, as the telvision set does not start to consume current. This turn on action only means a small disadvantage.

The described methods and devices presented above are certainly not limited to the use with television sets only, but in an advantageous fashion they can be used with other similar eletric apparatus such as video recorders, tape recorders and radio receivers as well as with other electric apparatus which can be set to a stand-by state.

## Claims

1. A device for arrangement in the power supply path between a voltage source and an electric apparatus, such as a television set or a similar apparatus which may take on a stand-by state or a similar operating condition, the device including:
- means (11;15), inserted in said supply path, for determining the supply current (11) or power delivered to said electric apparatus;
- first switch means (6,7), having a switch contact inserted in said supply path in series with said means (11; 5) for determining , and being controlled by said means for determining for interrupting supply of power from said voltage source to said means for determining and to said electric apparatus when the level of said supply current or power decreases below a first predetermined value;
- means (8,9,10; 8,6,7) for forcing re-establishing power supply from said voltage source to said means (11; 5) for determining, said means for re-establishment consisting of either
- an actuator (8) for enabling manually forcing said first switch means (6,7) into a closed state, or
- second switch means (8,9,10) having its contacts arranged parallel to those of said first switch means (6,7) and being mechanically actuatable for enabling manually forcing re-establishment of said power supply to said means for determining;
wherein said means (5; 11) for determining controls said first switch means (6,7) to re-establish power supply to said electric apparatus when the determined supply current or power delivered to said electric apparatus exceeds a second predetermined level.

2. The device according to claim 1, wherein when said means for forcing re-establishing power supply consists of said second switch means (8,9,10), said first switch means (6,7) is formed by an electronic relay.

## Patentansprüche

1. Vorrichtung für die Anordnung im Stromversorgungsweg zwischen einer Spannungsquelle und einem elektrischen Gerät wie einem Fernsehgerät oder einem entsprechenden Gerät, das einen Bereitschaftszustand annehmen kann oder einen entsprechenden Betriebszustand; wobei die Vorrichtung folgendes enthält:
- Mittel (11; 15), eingefügt in den genannten Versorgungsweg, um den Versorgungsstrom (11) oder die Kraft, die zum genannten elektrischen Gerät geliefert wird, zu bestimmen;
- Erstschaltmittel (6, 7), bei der ein Schaltkontakt in den genannten Stromweg in Serie mit den genannten Mitteln (11; 5) für die Bestimmung eingesetzt ist und der gesteuert wird durch die genannten Mittel für die Bestimmung der Unterbrechung der Stromversorgung von der genannten Spannungsquelle zu den genannten Mitteln für die Bestimmung und dem genannten elektrischen Gerät, wenn das Niveau der genannten Spannungsversorgung oder der Kraft sich unter einen vorher festgelegten Wert verringert;
- Mittel (8, 9, 10; 8, 6 7) für das Erzwingen der Wiedereinrichtung der Stromversorgung von der genannten Spannungsquelle zu den genannten Mitteln (11; 5) für die Bestimmung; die genannten Mittel für die Wiedereinrichtung bestehen entweder aus
- einem Schalter (8), um manuell die genannten Erstschaltmittel (6, 7) in einen geschlossenen Zustand zu zwingen, oder
- Zweitschaltmittel (8, 9, 10), deren Kontakte parallel zu denen der genannten Erstschaltmittel (6, 7) angeordnet sind und die mechanisch schaltbar sind, um ein manuelles Erzwingen der Wiedereinrichtung der genannten Stromversorgung zu den genannten Mitteln für die Bestimmung zu ermöglichen;
wobei die genannten Mittel (5;11) für die Bestimmung die genannten Erstschaltmittel (6, 7) steuern, um die Stromversorgung zum genannten Elektrogerät wieder einzurichten, wenn der bestimmte Versorgungsstrom oder die Kraft, die zu dem genannten Elektrogerät geliefert wird, ein zweites vorherbestimmtes Niveau überschreitet.

2. Vorrichtung laut Anspruch 1, wobei, wenn die genannten Mittel für das Erzwingen der Wiedereinrichtung der Stromversorgung aus den genannten Zweitschaltmitteln (8, 9, 10) bestehen, die genannten Erstschaltmittel (6, 7) durch ein elektronisches Relais gestaltet werden.

## Revendications

1. Un dispositif disposer sur le passage d'alimentation électrique entre une source de tension et un appareil électrique, tel qu'un téléviseur ou un appareil similaire qui peut être mis dans un état de veille ou dans une condition de fonctionnement similaire, tel dispositif comprenant :
- des moyens (11;15), insérés dans ledit passage d'alimentation électrique, pour déterminer le courant (11) ou la tension d'alimentation appliqué au dit appareil électrique ;
- un premier moyen de commutation (6,7), ayant un contact interrupteur inséré dans ledit passage d'alimentation électrique en série avec ledit moyen (11; 5) pour déterminer, et pour être commandé par ledit moyen pour déterminer l'interruption de l'alimentation d'électricité de ladite source d'alimentation au dit moyen de détermination et au dit appareil électrique quand le niveau dudit courant ou de ladite alimentation électrique chute au-dessus d'une valeur déterminée préalablement ;
- des moyens (8,9,10; 8,6,7) pour forcer le rétablissement de l'alimentation électrique de ladite source de tension électrique au dit moyen (11; 5) de détermination, lesdits moyens de rétablissement pouvant être constitués par
- un mécanisme (8) permettant de forcer manuellement ledit premier moyen de commutation (6,7) à l'état fermé, ou
- un second moyen de commutation (8,9,10) dont les contacts sont disposés en parallèle à ceux dudit premier moyen de commutation (6,7) et pouvant être commandé mécaniquement pour permettre de forcer manuellement le rétablissement de ladite alimentation audit moyen de détermination ;
dans lequel ledit moyen (5; 11) de détermination commande ledit premier moyen de commutation (6,7) pour rétablir l'alimentation électrique au dit appareil électrique quand le courant déterminé ou la tension électrique appliquée au dit appareil électrique dépasse un second niveau prédéterminé.

2. Le dispositif selon la réclamation 1, où quand ledit moyen prévu pour forcer le rétablissement de l'alimentation électrique est constitué dudit second moyen de commutation (8,9,10), ledit premier moyen de commutation (6,7) est constitué par un relais électronique.
